## Europäisches Patentamt
## European Patent Office
## Office européen des brevets

(19)

(11) Numéro de publication: **0 064 013 B1**

(12) **FASCICULE DE BREVET EUROPEEN**

(45) Date de publication du fascicule du brevet:
23.10.85

(51) Int. Cl.⁴: **G 01 C 15/00**

(21) Numéro de dépôt: **82420048.9**

(22) Date de dépôt: **06.04.82**

(54) **Appareil de levé topographique et report.**

(30) Priorité: **07.04.81 FR 8106912**

(43) Date de publication de la demande:
**03.11.82 Bulletin 82/44**

(45) Mention de la délivrance du brevet:
**23.10.85 Bulletin 85/43**

(84) Etats contractants désignés:
**BE DE GB IT NL**

(56) Documents cités:
**DE - C - 305 050**
**GB - A - 431 911**
**US - A - 1 441 153**
**US - A - 3 858 984**

(73) Titulaire: **INFOMAIN, Le Nogier Du Rigaudel Saint Andeol De Vals, F-07600 Vals Les Bains (FR)**

(72) Inventeur: **Halle, Pascal, 10, rue Puech Gaillard, F-81160 St Juery (FR)**

(74) Mandataire: **Ropital-Bonvarlet, Claude et al, Cabinet BEAU DE LOMENIE 99, Grande rue de la Guillotière, F-69007 Lyon (FR)**

## Description

La présente invention a pour objet un appareil pour le levé topographique de points remarquables d'une surface ou d'un volume et tel que défini dans le préambule de la revendication 1.

Les tracés de contours à une échelle de réduction s'opèrent jusqu'à présent en deux phases. Dans une première phase, on procède sur le terrain à un levé de cotes d'un série de points remarquables de la surface ou du volume environnant, points qui nécessitent des mesures de longueur et triangulation ou des mesures de longueur et d'angles: Dans une seconde phase, ces mesures sont reprises, coordonnées, réduites dans un rapport de réduction donné pour les longueurs, les angles étant conservés dans l'homothétie, puis transcrites point par point sur un support de restitution. Il n'est pas rare de constater, lors de cette opération, que la collecte des données s'avère insuffisante et qu'il convient de retourner sur le terrain pour prendre les mesures encore nécessaires au report fidèle sur le support de restitution.

Le levé des cotes des points remarquables s'effectue, dans la plupart des cas, au moyen d'un instrument de mesure linéaire qui nécessite la présence de deux opérateurs.

Une telle opération est donc au total fastidieuse, longue et onéreuse.

Pour tenter de remédier à ces inconvénients on propose de mettre en œuvre des instruments tels qu'alidade ou théodolite. Ces instruments, généralement d'un prix de revient élevé, sont d'une utilisation délicate et requièrent, notamment, préalablement à leur mise en service, une phase délicate de réglage en aplomb par rapport à un point de référence inclus à leur polygone d'appui.

Par ailleurs, ces instruments permettent surtout d'effectuer des levés de mesures d'angles et sont donc mal adaptés à la mesure de cotes de points remarquables.

Cette inadaptation ne permet pas d'obtenir des précisions de cote suffisamment grandes.

En outre, de tels appareils ne conviennent pas pour effectuer des levés de cotes à l'intérieur de locaux divers où les mesures linéaires à relever sont tout au plus généralement moyennes, comprises entre zéro et, le plus souvent, dix mètres.

On a proposé, dans un but semblable de mettre en œuvre un appareil du type de celui décrit dans le brevet US-A-1 441 153. Selon ce brevet, un tel appareil comprend un pied réglable muni d'une tête de support réglable en assiette horizontale. Cette tête supporte une table de traçage possédant un axe de direction perpendiculaire sur laquelle est monté libre de tourner un dispositif de levé comprenant un ruban souple enroulé sur un tambour de dévidage.

Un tel appareil ne donne pas entière satisfaction car il ne permet pas, pour chaque mesure, d'identifier, de matérialiser de façon temporaire, en d'autres termes, de définir précisément chaque point remarquable dont le levé de cote doit être effectué puis de reporter aussi précisément une telle mesure singulière sur la table de traçage.

L'invention vise à résoudre le problème ainsi posé en proposant un nouvel appareil de levé topographique et de report qui permette d'effectuer, par un seul opérateur, le levé rapide, précis et sûr des cotes de points remarquables d'une surface ou d'un volume.

Un autre but de l'invention est de proposer un appareil simple, robuste, pratique, permettant d'effectuer le levé de cotes de points remarquables de surface ou de volume, même dans des locaux à faible éclairement.

Un but supplémentaire de l'invention est de proposer un appareil entièrement démontable, en vue de faciliter son rangement mais surtout aussi son transport facile sur les lieux d'utilisation.

Un but encore de l'invention est d'offrir un appareil permettant d'effectuer le levé-report de plans d'ensembles complexes en obtenant, à partir de levés élémentaires de surfaces ou volumes, par exemple, l'épaisseur de mur ou cloison de séparation sans avoir recours à une méthode de mesure distinctive.

Un autre but encore de l'invention est de fournir un appareil entièrement autonome ne nécessitant sur place aucune énergie disponible pour son fonctionnement.

Pour atteindre les buts ci-dessus, l'appareil de levé topographique conforme à l'invention est caractérisé en ce qu'il comprend:

— une table de traçage adaptable sur la tête et portant un axe de support de direction perpendiculaire au plan de la table,
— un dispositif de visée, de levé et de report monté, de façon amovible, pour tourner sur l'axe et comportant:
— un générateur monté sur ledit dispositif de visée et de levé et émettant un faisceau lumineux selon une direction perpendiculaire à celle de l'axe de support et confondue avec celle de ladite ligne de visée, ledit faisceau lumineux produisant une image permettant de visualiser lesdits points remarquables,
— une règle de report et de traçage, solidaire dudit dispositif de visée et de levé, superposée à la table de traçage et comportant une fente bordée par une échelle graduée de réduction et dont l'axe médian longitudinal coupe l'axe géométrique dudit axe de support et est parallèle à la direction dudit faisceau lumineux.

D'autres caractéristiques de l'invention apparaîtront à la lecture de la description faite ci-dessous en référence aux dessins annexés.

La fig. 1 représente l'appareil selon l'invention en perspective éclatée.

La fig. 2 est une perspective montrant la mise

en œuvre de cet appareil.

Les fig. 3 et 4 sont des schémas correspondant à des levé-reports élémentaires obtenus par la mise en œuvre de l'appareil.

La fig. 5 est un plan d'ensemble du levé-report global résultant de l'association des levé-reports élémentaires selon les fig. 3 et 4.

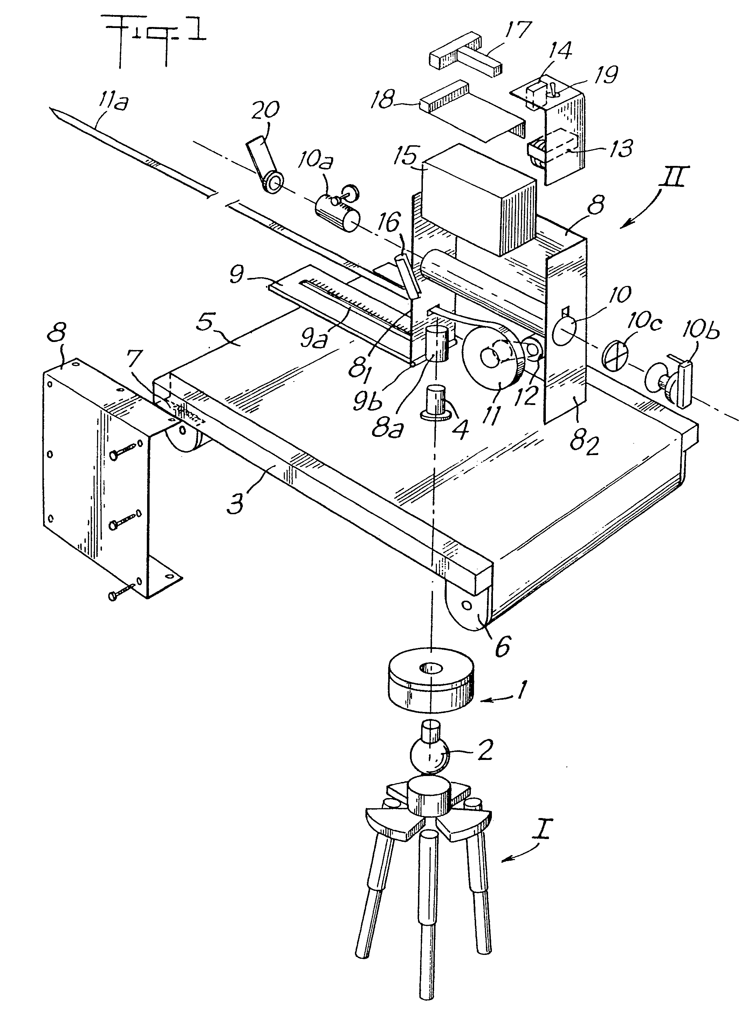

Selon la fig. 1, l'appareil selon l'invention comprend, conformément à un premier mode de réalisation, un pied tripode I, réglable, muni, en partie supérieure, d'une tête de support 1. Cette tête 1 peut comporter une rotule à épaulement 2 ou encore un dispositif trois points de réglage d'assiette horizontale.

Une planche 3, formant table de traçage, est fixée sur la tête de support 1, notamment par un axe 4 vertical perpendiculaire au plan de la table et servant également à centrer un support de restitution 5, tel qu'un papier calque. Le support 5 peut être une feuille prédécoupée ou une bande montée sur des rouleaux amovibles 6 portés par la planche 3 au moyen de charnière à ressort 7.

L'appareil comprend, par ailleurs, un dispositif II de visée, de levé et de report, destiné à être monté sur l'axe 4 afin de pouvoir tourner librement, sans appui direct, sur le support 5. A cette fin, le dispositif II comprend un bâti 8 constitué en une ou plusieurs parties, afin de former simultanément boîtier de support et de protection pour les moyens techniques qu'il comporte. Le bâti 8 comporte, à sa base, un palier cylindrique 8a ou un organe équivalent destiné à coopérer avec l'axe 4.

Le côté frontal $8_1$ du bâti porte une règle de report de tracé 9 qui possède une fente 9a dont l'axe longitudinal médian passe par l'axe géométrique de l'axe 4. La fente 9a est bordée d'au moins une échelle de report et de réduction. La règle 9 s'étend horizontalement, sensiblement dans le plan de la base du bâti 8, de manière à être placée le plus près de la planche 3, mais sans contact physique avec cette dernière. Selon une réalisation préférée, la règle 9 est montée sur le bâti par un axe d'articulation horizontal 9b permettant de ramener cette règle, soit en dessous du bâti 8, soit devant le côté $8_1$, pour faciliter le transport et le rangement.

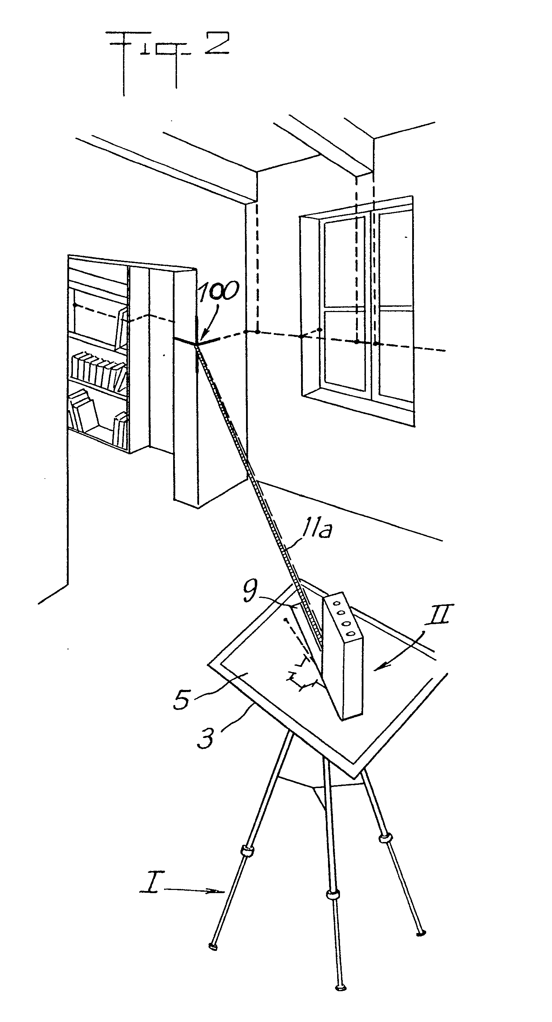

Le bâti 8 abrite un tube 10 d'axe horizontal perpendiculaire à l'axe 4. Le tube 10 est, par ailleurs, monté sur le bâti de manière que le prolongement de son axe soit contenu dans un plan vertical passant par l'axe médian longitudinal de la fente de la règle 9. Le tube 10 est destiné au support d'un ensemble optique 10a associé à un système de réglage de l'objectif, par exemple par pignon et crémaillère. L'ensemble 10a est destiné à être monté dans le tube 10, de façon amovible, au niveau du côté frontal $8_1$ du bâti. Le tube 10 est conçu pour permettre le montage amovible, au niveau du côté postérieur $8_2$ du bâti, d'un bloc-lampe 10b à miroir condensateur. Le tube 10, l'ensemble 10a et le bloc 10b sont destinés à produire lorsque le bloc-lampe est alimenté électriquement, un faisceau ou pinceau lumineux permettant d'obtenir une image 100 donnée sur un support voir figure 2 recevant ledit faisceau. Cette image 100 est, de préférence, celle d'une croix à quatre branches, obtenue dans le cas présent par l'interposition entre l'ensemble 10a et la lampe 10b d'un disque 10c délimitant une mire cruciforme.

Le bâti 8 supporte également un tambour ou une poulie 11 de stockage d'un ruban 11a de mesure linéaire, susceptible d'être déroulé, par une fenêtre du côté frontal $8_1$, selon une direction horizontale parallèlement à l'axe du tube 10. Le tambour 11 est, de préférence, associé à un moteur électrique 12 de réenroulement du ruban 11a. Le tambour 11 est, par ailleurs, associé à un dispositif de freinage au défilement, à action progressive, pouvant être neutralisé manuellement ou automatiquement en combinaison avec le moteur 12.

Le bâti 8 supporte aussi un chargeur-redresseur 13, associé à une embase 14 d'adaptation d'un cordon d'alimentation, ainsi qu'une batterie rechargeable 15. Le bâti comporte, en outre, un système 16 d'éclairage du support 5 et/ou de la règle 9, un système 17 de réglage de niveau selon deux directions orthogonales et un système 18 de blocage de la règle 9 repliée.

Sur le dessus du bâti, est prévu un système 19 de commande d'alimentation du bloc-lampe 10b et du moteur 12.

Le dispositif II est complété, par ailleurs, par un miroir 20 monté sur un axe horizontal situé en dessous de l'orifice de sortie du tube 10, face auquel ledit miroir peut ainsi être relevé manuellement. Le miroir 20 peut être monté de façon amovible sur le côté frontal $8_1$.

L'appareil décrit ci-dessus est utilisé de la façon suivante.

Lorsqu'il s'agit de procéder à un levé de cotes de points remarquables d'un local, l'appareil est monté comme illustré par la fig. 2. La planche 3 est disposée sur la tête du pied I et le dispositif II, après ouverture de la règle 9, est adapté sur l'axe 4. Un réglage d'aplomb est effectué pour que l'axe du tube 10 soit horizontal.

Les levés-reports s'opèrent par la méthode des coordonnées polaires, l'appareil de levé-report étant placé dans une position qui permet de viser optiquement le maximum de points remarquables du contour à restituer. Après obtention de l'horizontalité pour le faisceau lumineux, le bloc-lampe 10b est alors alimenté pour émettre le faisceau lumineux qui produit une image cruciforme 100 sur le plan de visée. Cette image 100 visualise pour l'opérateur un point visé dont la distance par rapport au côté frontal $8_1$ peut être mesurée avec précision en déroulant le tuban 11a pour amener son extrémité libre au niveau du point considéré. La lecture de la mesure s'effectue au ras du côté frontal $8_1$ et cette mesure est ensuite reportée sur le support 5 en sélectionnant la graduation correspondante de l'échelle de réduction 9a, le ruban 11a et la règle sont disposés ou montés, à cet effet, de manière que l'origine coïncide avec l'axe géométrique de l'axe 4. Le report du point sélectionné s'effectue sur le demi-axe tracé à partir de la règle selon l'orientation de visée.

Ainsi, l'appareil selon l'invention permet de supprimer les deux phases successives de levé d'une cote, puis de restitution ultérieure sur un support, comme dans la méthode actuelle. En effet, la liaison mécanique, établie entre le dispositif de repérage-mesure et le dispositif de restitution, supprime la nécessité de la triangulation ou de la mesure des angles. La constitution, sous les yeux de l'opérateur, du contour qu'il cherche à restituer, élimine tout oubli de collecte de données. Le faisceau lumineux puissant, utilisé pour le repérage, possède un axe horizontal. La rotation de ce faisceau autour d'un axe vertical décrit une isohypse sur tout obstacle rencontré sur son chemin et, en particulier, les points remarquables du contour à restituer. Cette propriété autorise la prise de contour en courbe de niveau et, par conséquent, l'appréciation du défaut éventuel de parallélisme entre le lieu géométrique du faisceau et tout plan qui semblerait être horizontal.

Il est aussi possible d'effectuer des levés-reports dans des volumes très encombrés pour autant que certains points remarquables puissent directement être visés optiquement.

Il est également possible d'établir un lien spatial entre deux levés-reports pour autant qu'ils aient en commun deux points remarquables. Cette propriété est mise à profit pour effectuer le levé-report de plans d'ensembles complexes et en déduire, par exemple, certaines propriétés des volumes. On peut, ainsi, obtenir des mesures d'épaisseurs de murs, ou obstacles, par méthode non destructive, en liant les contours de leurs différentes faces.

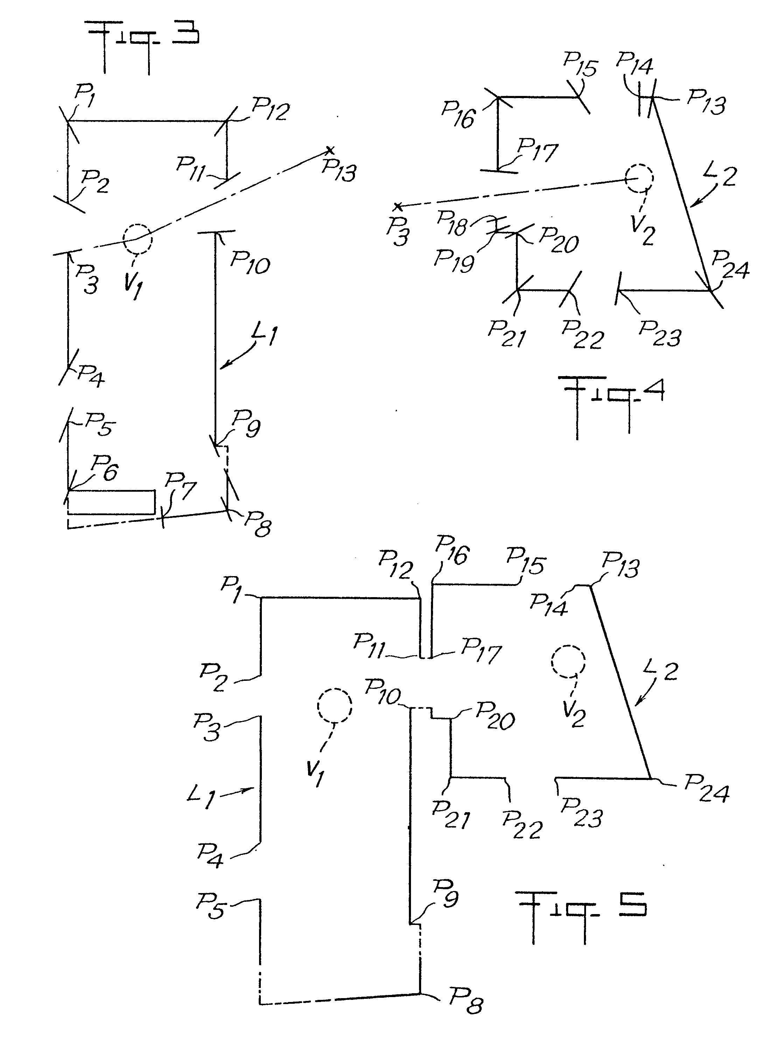

La fig. 3 montre, à titre d'exemple, le lavé successif de points remarquables $P_1 \ldots P_{12}$, effectué à partir d'un pôle de visé $V_1$, selon douze directions remarquables. La liaison entre ces points permet de restituer sur le support le plan du local $L_1$ correspondant.

Lorsque le relevé d'un tel local ne représente qu'une phase élémentaire devant être complétée par la restitution du plan d'un local attenant, tel que $L_2$ (fig. 4), on procède pour le local $L_1$ au choix de l'emplacement du pôle $V_1$, de manière à pouvoir effectuer une visée de rappel en vue du levé de la cote d'un point $P_{13}$ appartenant au local $L_2$.

Le choix de l'emplacement du pôle $V_2$, en vue du relevé du local $L_2$, est effectué de façon analogue afin de pouvoir viser un point P du relevé $L_1$. Dans l'exemple illustré, la visée de rappel à partir du pôle $V_2$ concerne le point $P_3$.

Il devient ainsi possible, en faisant coïncider les points de rappels avec les points de lavé, d'associer, dans leur position relative réelle, les plans des locaux $L_1$ et $L_2$. Un tel assemblage, tel qu'illustré par la fig. 5, permet alors de faire apparaître l'épaisseur d'obstacles intermédiaires tels que des murs ou des cloisons, sans procéder à une mesure et un levé spécifique.

Dans cet exemple, les points remarquables du local $L_2$ portent les références $P_{13}$.

Dans ce qui précède, il est précisé que le côté frontal $8_1$ peut être équipé d'un miroir 20. Ce miroir est monté sur l'appareil en sorte qu'il ne dévie, lorsqu'il est manœuvré, que la branche supérieure de l'axe vertical de l'image de la croix, laissant la branche inférieure de cet axe mais aussi l'axe horizontal se projeter sur tout obstacle placé sur le trajet du faisceau lumineux émis par le système-optique.

L'axe de rotation du miroir étant une horizontale, la branche supérieure de l'axe vertical de l'image de la croix se projette sur tout obstacle placé dans le plan vertical contenant l'axe optique du faisceau non dévié.

Cette particularité permet de reporter sur l'isohypse tout point remarquable se trouvant dans le plan vertical contenant l'axe optique du faisceau linéaire de sortie du système optique de repérage et, par suite, de tenir compte de la préence éventuelle d'un obstacle pour déterminer néanmoins la direction azimuthale de visée. Un tel miroir permet aussi de reporter, par projection sur l'isohypse tout point remarquable situé à un niveau différent.

Selon une variante de réalisation de l'appareil à automatisation sous poussée, l'axe amovible inséré dans le tube rigidement lié au tube porte optique de repérage, est muni d'un système d'entraînement qui agit sur la rotation du dispositif de »viséelevé-report« Il avec une démultiplication telle que l'opérateur peut suivre en continu, avec l'extrémité libre de l'ensemble de mesure linéaire, le déplacement du faisceau lumineux le long de l'isohypse.

Selon une autre réalisation de l'appareil, le ruban 11a est remplacé par un fil se déroulant d'un tambour équipé d'un moyen de mesure électrique du défilement, destiné à exciter un système électrique de positionnement d'un stylet-traceur chargé d'impressionner le support de restitution.

Selon encore une autre réalisation de l'appareil, celui-ci comporte des moyens d'aide à la restitution constitués d'une glissière sur laquelle coulisse (par transmission à pignon-chaîne, visécrou ou poulie-courroie) un ensemble stylet-encreur qui se déplace sous l'action d'un moteur excité par un translateur, lequel est excité par un compteur d'impulsion de défilement. L'impression du support de restitution est réalisée par excitation d'un électro-aimant solidaire du stylet-encreur, cette excitation pouvant être déclenchée par impulsion d'origine électrique ou ultrasonore, à partir du point concerné du contour à restituer, cette impulsion pouvant être entretenue ou intermittente.

L'appareil, objet de l'invention, peut ainsi être utilisé pour réaliser avec grande précision et plus grande économie de moyen (absence de mesure de déplacement angulaire) tout levé ou constat pour lequel le report sur le lieu du levé, quasi simultané à ce dernier, est un élément appréciable de contrôle du travail réalisé.

L'utilisation d'un faisceau de lumière artificielle permet d'accéder au domaine des levés en milieu pas ou peu éclairé naturellement, domaine difficilement accessible aux appareils de topographie à oculaires ou viseurs. L'objet de l'invention permet, en outre, de réaliser des comparaisons de direction par rapport à un plan horizontal (contrôle de niveau) ou un plan vertical (contrôle d'aplomb).

Des applications particulièrement intéressantes peuvent être menées dans le domaine du levé de bâtiments ou de monuments et, notamment, dans la restauration de l'habitat.

La fig. 1 montre que la batterie 15, rechargeable, est incluse au bâti-boîtier en étant placée à proximité du côté frontal $8_1$, afin d'être sensiblement centrée par rapport à l'axe 4. Dans le but de combattre la réaction de freinage au dévidage du ruban 11a, il peut être prévu de placer la batterie 15 à proximité du côté postérieur $8_2$, afin de lui faire jouer une fonction de contrepoids d'équilibrage.

## Revendications

1. Appareil pour le levé topographique de points remarquables d'une surface ou d'un volume, du type comportant un pied (I) réglable muni d'une tête (1) de support réglable en assiette horizontale, une table de traçage (3) adaptable sur la tête (1) de support et portant un axe de support (4) de direction perpendiculaire au plan de la table de traçage (3), un dispositif (II) de visée et de levé, définissant une ligne de visée et monté de façon amovible pour tourner sur l'axe de support (4) et un ruban souple de mesure (11a) monté sur un tambour d'enroulement (11) solidaire dudit dispositif (II) de visée et de levé, ledit ruban (11a) étant dévidable parallèlement à ladite ligne de visée,

caractérisé en ce qu'il comporte, en outre:

— un générateur (10) monté sur ledit dispositif (II) de visée et de levé et émettant un un faisceau lumineux selon une direction perpendiculaire à celle de l'axe de support (4) et confondue avec celle de ladite ligne de visée, ledit faisceau lumineux produisant une image (100) permettant de visualiser lesdits points remarquables,
— une règle (9) de report et de traçage, solidaire dudit dispositif (II) de visée et de levé, superposée à la table de traçage (3) et comportant une fente bordée par une échelle graduée de réduction (9a) et dont l'axe médian longitudinal coupe l'axe géométrique dudit axe de support (4) et est parallèle à la direction dudit faisceau lumineux.

2. Appareil selon la revendication 1, caractérisé en ce que la table de traçage (3) est prévue pour porter un support de report (5).

3. Appareil selon la revendication 1, caractérisé en ce que le générateur (10) de faisceau lumineux, le ruban (11a) et le tambour (11), ainsi que la règle (9) sont portés par un bâtiboîtier (8) comportant une contrepartie (8a) d'adaptation sur l'axe (4) de support.

4. Appareil selon la revendication 1, caractérisé en ce que le générateur (10) émet un faisceau lumineux produisant une image (100) cruciforme.

5. Appareil selon la revendication 1 ou 4, caractérisé en ce que le générateur (10) de faisceau lumineux est associé à un miroir (20) de déviation au moins partielle dudit faisceau.

6. Appareil selon la revendication 1, caractérisé en ce que le ruban souple de mesure (11a) et l'échelle graduée (9a) ont des origines coïncidant avec l'axe géométrique de l'axe (4) de support.

7. Appareil selon la revendications 1, caractérisé en ce que le tambour d'enroulement (11) sur lequel est monté le ruban souple de mesure (11a) est associé à un frein de défilement et à un moteur d'enroulement (12).

8. Appareil selon la revendication 1 ou 3, caractérisé en ce que la règle (9) est repliable contre le bâti-boîtier (8).

9. Appareil selon la revendication 8, caractérisé en ce qu'il est muni d'un stylet encreur se déplaçant automatiquement parallèlement à la règle (9) en rapport avec la mesure levée à reporter.

10. Appareil selon la revendication 1 ou 7, caractérisé en ce qu'il comprend une batterie (15) d'alimentation d'au moins le générateur (10) de faisceau lumineux, ladite batterie (15) étant rechargeable et disposée dans le bâti-boîtier (8) de façon déportée par rapport à l'axe de support (4) afin de constituer un contrepoids d'équilibrage.

11. Appareil selon la revendication 3, caractérisé en ce que le bâti-boîtier (8) est associé à moto-réducteur d'entraînement en rotation sur l'axe de support (4) par rapport à la table (3).

## Patentansprüche

1. Vorrichtung zur topographischen Vermessung wahrnehmbarer Punkte einer Oberfläche oder eines Raums mit

— einen einstellbaren Fuß (1), der mit einem einstellbaren Trägerkopf (1) in Form eines horizontal angeordneten Tellers,
— einem zur Anbringung auf dem Trägerkopf (1) angepaßten Zeichentisch (3) mit einer zu dessen Ebene senkrechten Trägerachse (4),
— einer Vermessungs- und Bildfeldsuchervorrichtung (II), die eine Suchergrade definiert und abnehmbar und auf der Trägerachse (4) drehbar angeordnet ist, und
— einem biegsamen Meßband (11a), das auf einer mit der Vermessungs- und Bildfelduntersuchervorrichtung (II) fest verbundenen Aufrolltrommel (11) angebracht ist, wobei das Meßband (11a) parallel zur Suchergraden abrollbar ist,

gekennzeichnet durch

— eine auf der Vermessungs- und Bildfeldsuchervorrichtung (II) montierten Lichtquelle (10), die senkrecht zur Trägerachse (4) und längs der Suchergraden einen Lichtstrahl emittiert, der ein Bild (100) zur Darstellung der wahrnehmbaren Punkte erzeugt, und
— ein Übertragungs- und Zeichenlineal (9), das mit der Vermessungs- und Bildfeldsuchervorrichtung fest verbunden ist, auf dem Zeichentisch (3) angeordnet ist und einen mit einer Reduktionsskala (9a) versehenen Schlitz aufweist und dessen Längsmittelachse die geometrische Achse der Trägerachse (4) schneidet und parallel zur Richtung des Lichtstrahls verläuft.

2. Vorrichtung nach Anspruch 1, dadurch gekennzeichnet, daß der Zeichentisch (3) zum Aufnehmen eines Übertragungsträgers (5) ausgebildet ist.

3. Vorrichtung nach Anspruch 1, dadurch gekennzeichnet, daß die Lichtquelle (10), das Band (11a) und die Trommel (11) sowie das Lineal an einem Gehäusekasten (8) angebracht sind, der ein Gegenstück (8a) zur Anbringung an der Trägerachse (4) aufweist.

4. Vorrichtung nach Anspruch 1, dadurch gekennzeichnet, daß die Lichtquelle (10) einen Lichtstrahl emittiert, der ein kreuzförmiges Bild (100) erzeugt.

5. Vorrichtung nach Anspruch 1 oder 4, dadurch gekennzeichnet, daß die Lichtquelle (10) mit einem Umlenkspiegel (20) zum Umlenken mindestens eines Teils des Lichtstrahls versehen ist.

6. Vorrichtung nach Anspruch 1, dadurch gekennzeichnet, daß das biegsame Meßband (11a) und die Skala (9a) einen gemeinsamen Anfangspunkt haben, der mit der geometrischen Achse der Trägerachse (4) zusammenfällt.

7. Vorrichtung nach Anspruch 1, dadurch gekennzeichnet, daß die Aufrolltrommel (11), auf der das biegsame Meßband (11a) angebracht ist mit einer Abrollbremse und einem Aufrollmotor (12) versehen ist.

8. Vorrichtung nach Anspruch 1 oder 3, dadurch gekennzeichnet, daß das Meßband (9) gegen den Gehäusekasten (8) zurückziehbar ist.

9. Vorrichtung nach Anspruch 8, gekennzeichnet durch einen Tuscheschreiber, der sich automatisch in Abhängigkeit von dem zu übertragenden Vermessungswert parallel zum Lineal (9) bewegt.

10. Vorrichtung nach Anspruch 1 oder 7, gekennzeichnet durch eine wiederaufladbare Speisebatterie (15) mindestens für die Lichtquelle (10), wobei die Batterie in dem Gehäusekasten derart versetzt zu der Trägerachse angeordnet ist, daß sie ein Ausgleichsgewicht bildet.

11. Vorrichtung nach Anspruch 3, dadurch gekennzeichnet, daß der Gehäusekasten (8) mit einem Antriebsmotor mit Untersetzungsgetriebe versehen ist zum Drehen des Gehäusekastens (8) relativ zum Zeichentisch (3) um die Trägerachse.

**Claims**

1. Apparatus for plotting conspicuous points of a surface or of a volume, of the type comprising an adjustable stand (I) provided with a supporting head (1) adjustable in horizontal position, a tracing table (3) adaptable on the supporting head (1), and bearing a supporting axle (4) of direction perpendicular to the plane of the tracing table (3), survey and plotting means (II) defining a line of sight and mounted in removable manner for pivoting about the supporting axle (4) and a supple measuring tape (11a) mounted on a winding drum (11) integral with said survey and plotting means (II), said tape (11a) being unwindable in parallel to said line of sight,

characterized in that it further comprises:

— a generator (10) mounted on said survey and plotting means (II) and delivering a light beam in a direction perpendicular to that of the supporting axle (4) and coinciding with that of said line of sight, said light beam producing an image (100) permitting the display of said conspicuous points,
— a carry over and tracing rule (9) integral with said survey and plotting means (II), superimposed on the tracing table (3) and comprising a slot bordered by a graduated reduction scale (9a) of which the longitudinal median axis cuts through the geometrical axis of said supporting axle (4) and is parallel to the direction of said light beam.

2. Apparatus according to claim 1, characterized in that the tracing table (3) is designed to bear a carry over support (5).

3. Apparatus according to claim 1, characterized in that the light beam generator (10), the tape (11a) and the drum (11), as well as the rule (9) are carried by a housing structure (8) comprising a counterpart (8a) for adaption on the supporting axle (4).

4. Apparatus according to claim 1, characterized in that the generator (10) delivers a light beam producing a cross like image (100).

5. Apparatus according to claim 1 or 4, characterized in that the light beam generator (10) is associated to a mirror (20) for a at least partial deviation of said beam.

6. Apparatus according to claim 1, characterized in that the supple measuring tape (11a) and the graduated scale (9a) have origins coinciding with the geometrical axis of the supporting axle (4).

7. Apparatus according to claim 1, characterized in that the winding drum (11) on which the supple measuring tape is mounted (11a), is associated to an unwinding brake and to a winding motor (12).

8. Apparatus according to claim 1 or 3, characterized in that the rule (9) is foldable against the housing structure (8).

9. Apparatus according to claims 8, characterized in that it is provided with an inking stylus moving automatically in parallel to the rule (9) as a function of the plotted measurement to be carried over.

10. Apparatus according to claim 1 or 7, characterized in that it comprises a battery (15) for feeding at least the light beam generator (10), said battery (15) being rechargeable and placed inside the housing structure (8) in offset manner with respect to the supporting axle (4) in order to constitute a balancing weight.

11. Apparatus according to claim 3, characterized in that the housing structure (8) is associated to a geared motor for driving in rotation on the supporting axle (4) with respect to the table (3).

Fig. 1

Fig. 2

Fig. 3

Fig. 4

Fig. 5